# EUROPEAN PATENT SPECIFICATION

(11) **EP 0 764 403 B1**
(45) Date of publication and mention of the grant of the patent: **27.03.2002**
(21) Application number: 96202469.1
(22) Date of filing: 05.09.1996
(51) Int. Cl.: A01J 5/017

(54) **A method of automatically milking animals and an implement for applying same**
Verfahren zum automatischen Melken von Tieren und Vorrichtung zu deren Anwendung
Méthode de traite automatique d'animaux et dispositif pour sa mise en oeuvre

(30) Priority: 19.09.1995 NL 1001234
(43) Date of publication of application: 26.03.1997
(73) Proprietor: MAASLAND N.V., 3155 PD Maasland (NL)
(72) Inventor: Van der Lely, Ary, 3155 PD Maasland (NL)
(74) Representative: Corten, Maurice Jean F.M.

(56) References cited:
- EP-A- 0 091 892
- EP-A- 0 639 327
- WO-A-95/26132

## Description

The present invention relates to a method of automatically milking animals according to the preamble of claim 1.

Such a method is known from EP-A 0091892. It is known only to milk the animals when a predetermined time has elapsed since the previous milking run. In this method, animals which have recently been milked and present themselves again at the milking robot, e.g. because concentrate is supplied to them there, are not yet milked. Furthermore, it has already been proposed by the applicant in an earlier patent application only to milk an animal when the milk yield to be expected from this animal exceeds a fixed value (see: PCT/NL95/00101).

The present invention aims at answering the question whether an animal, after having presented itself again at the milk box or near thereto, is to be milked again, on the basis of parameters deviating from those in the aforementioned known methods.

In accordance with the invention, for that purpose the method described in the preamble is characterized in that, the milking criterion is defined on the basis of the quantity of milk (M) yielded by means of the milking robot in a fixed period of time (T) and the quantity of milk (m) supplied by one animal in this period of time (T). This milking criterion is constituted in particular by the waiting time (W) that should at least have elapsed since the last milking run of this animal, in order that the animal, after having presented itself again at the milk box of near thereto, is to be milked again.

In a concrete embodiment, this waiting time (W) is a function of the relation (M/m) between the quantity of milk (M) which has been yielded by means of the milking robot in the period of time (T) and the quantity of milk (m) which has been supplied by one animal in said period of time (T). The functional relation between this waiting time (W) and the aforementioned relation (M/m) may e.g. be approximately in an interval around the value M/m = 60 according to M/m = W² + 5W - 6. In other words, whether an animal having presented itself again at the milk box or near thereto is to be milked again is individually determined for each animal depending on the quantity of milk supplied recently by this animal in relation to the quantity of milk supplied by all the animals together.

According to a preferred embodiment of the invention, it is possible not to milk an animal for which the calculated waiting time (W) exceeds a fixed maximum value, whereby it will be indicated that this animal is to be set dry.

When an animal, for any reason whatsoever, has supplied during its last milking run a quantity of milk (m1) deviating considerably from the quantity of milk (m) supplied by this animal on average per milking run in the aforementioned period of time (T), it is possible to adjust the waiting time (W), i.e. by multiplication by a factor m1/m. Likewise it is possible, when the quantity of milk (N) yielded by means of the milking robot in the calculated waiting time (W) appears to deviate considerably from the calculated quantity M*W/T, to adjust the waiting time (W) subsequently calculated by a coefficient M*W/T*N.

Besides to a method, the invention also relates to a construction for automatically milking animals which are allowed to walk around freely in an accommodation and to go each individually to a milk box including a milking robot for being milked there, which construction is provided with an animal identification system and means for establishing the quantity of milk yielded from each animal. The construction is then characterized in that there is available a computer with means to define, on the basis of the quantity of milk yielded by means of the milking robot in a fixed period of time and the quantity of milk supplied by one animal in said period of time, a milking criterion that has to be met in order that the animal, after having presented itself again at the milk box or near thereto, is to be milked again. The computer may additionally be equipped for executing the further aforementioned aspects of the method in accordance with the invention.

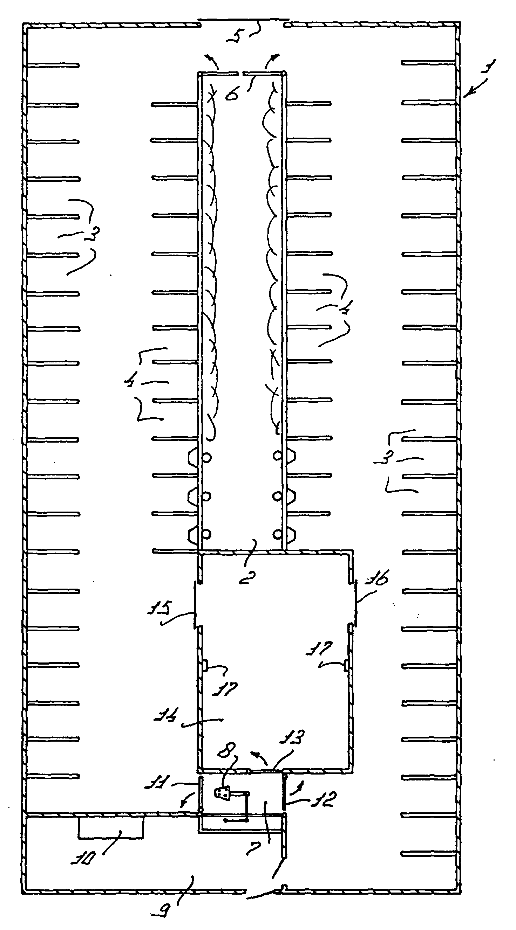

For a better understanding of the invention and to show how the same may be carried into effect, reference will now be made, by way of example, to the accompanying drawing showing schematically a milk box in which a milking robot is disposed.

In the drawing there is represented a loose house 1, in the longitudinal direction of which there is arranged a feed alley 2. At both sides of this feed alley 2, over almost the entire length of the loose house 1 at the sides of the exterior wall, there are provided cubicles 3, and, at the side of the feed alley 2, there are disposed feed stands 4. Via doors 5 and 6 in the cowshed 1, by means of a tractor driving in the feed alley 2, it will be possible to transport hay feed to feed grooves and/or concentrate to feed troughs in the feed stands 4. The arrangement of the cubicles 3 and the feed stands 4 is such that there remains sufficient walking room for the animals between the cubicles and the feed stands, so that they are allowed to move to a sufficient extent and, in principle, to walk around in the cowshed. Near the short side of the cowshed there is a milk box 7 where a machine for automatically milking animals is arranged, which milking machine is provided with a milking robot 8 for automatically connecting the teat cups to the teats of an animal, respectively disconnecting same therefrom. Between the milk box 7 and the short side of the cowshed 1 there is provided a computer room 9, in which there is arranged a computer 10 as well as all the equipment constituting part of the milking machine that is not accommodated in the milk box 7 itself. The milk box 7 is provided with an entrance door 11 and two exit doors 12 and 13. Via the door 11 animals can enter the milk box from the loose house, while the animals can return to the loose house from the milk box via the door 12. As soon as an animal enters the milk box from the loose house or from the meadow via the loose house, the identity of the animal is ascertained in a customary manner. By means of the animal identification system used therefor, there is obtained access to a data file present for this animal in the computer of the system. In said file there are inter alia recorded data which are relevant for answering the question whether or not the animal is to be milked.

Next to the milk box 7 there is provided a separation room 14, which is accessible from the milk box via the door 13. The separation room 14 is further accessible via doors 15 and 16. In the room 14 animals can be separated from those in the loose house of the cowshed 1, e.g. because they have an udder shape being such that the teat cups cannot be connected automatically, or because they have to be inseminated or because their hoofs have to be cut, in which cases the farmer may bring the animals e.g. via the door 15 into the separation room 14, but also because mastitis has been diagnosed with the animals which are present in the milk box 7 and then are led from there via the door 13 into the separation room 14 instead of into the loose house of the cowshed 1. Into the separation room there may also be led the animals presenting themselves at the milking robot within a too short period of time after their last milking run, in particular when they are expected not having to stay there for a very long time prior to still being milked. The farmer can get animals out of the separation room 14 via the door 16. By means of the computer 10, which is used otherwise for the control of automatically milking and automatically connecting the teat cups to the teats respectively disconnecting same therefrom, as well as for executing any operations that might further be of importance for the milking, there may be recorded the number of animals which are led from the milk box 7 to the separation room 14. However, when the farmer himself leads animals via the door 15 into the separation room, or gets animals out of there, e.g. via the door 16, then the number of animals present in the separation room recorded in the computer 10 will not correspond with the reality. In order to avoid this drawback, there are available counting means 17 connected to the computer 10. These counting means are preferably disposed near the doors 15 and 16 and can manually be controlled by the farmer. When the farmer leads an animal via one of the doors 15, 16 into the separation room, he will be able to make the number of animals indicated thereby correspond with the reality. Likewise the farmer, when getting an animal out of the separation room 14 via one of the doors 15, 16, will be able, by controlling the counting means, to adapt the number of animals present in the separation room, so that, because the counting means 17 are connected to the computer 10, at all times the correct number of animals in the separation room is recorded in the computer 10 and indicated, if desired, on a display disposed on the counting means 17. When, in the absence of the farmer, too many animals are led from the milk box 7 to the separation room 14, it will be possible to put an alarm into operation for alerting the farmer that the number of animals in the separation room is too large.

As already pointed out, animals may present themselves at the milk box or near thereto, while they have already been milked recently. For that reason there has to be defined a milking criterion that has to be met in order that such an animal is then to be milked again. This milking criterion may be constituted by the waiting time (W) that should at least have elapsed since the last milking run of this animal, in order that the animal, after having presented itself again at the milk box of near thereto, is to be milked again. This milking criterion is defined on the basis of the quantity of milk (M) yielded by means of the milking robot in a fixed period of time (T) and the quantity of milk (m) supplied by one animal in this period of time (T). This milking criterion is defined in particular on the basis of the relation (M/m) between the quantity of milk (M) which has been yielded by means of the milking robot in the period of time (T) and the quantity (m) which has been supplied by one animal in the period of time (T).

Upon starting from a situation of sixty cows which can be milked three times per 24 hours, whereby each milking run takes approximately eight minutes, then it appears that the functional relation between the waiting time (W) and the relation (M/m) in an interval around a value M/m = 60 can be represented approximately by the comparison M/m = W² + 5W - 6. By thus making the waiting time (W) depend on the relation between the milk production of all the animals together and that of the relevant animal, there is made a more efficient use of the milk box and the milking robot. This calculation of the waiting time entails that high productive cows will have a relatively shorter waiting time than animals producing less milk. When there is obtained from an animal a milk yield corresponding to the average milk yield of the animals, then the relation M/m expresses the number of animals, i.e. 60 in the example mentioned. For this relevant animal the waiting time will then amount to 6 hours. When a specific animal produces twice as much milk so that, in the present example, the relation M/m will equal 30, then the waiting time for this animal is to be fixed at four hours. In this manner, it will be possible to calculate a waiting time W for each animal. It will be obvious that, when the production of an animal is far below the average production of the animals, the calculated waiting time will be so long that there is obtained a clear indication that the animal is to be set dry. The relation M/m is each time calculated for each animal upon its presentation at the milk box or near thereto, because the values M and m are variables that change continuously. Therefore, there are preferably utilized for these values progressing averages over e.g. the last two days, so that each time an animal presents itself at the milk box or near thereto, there will be applied an other waiting time for this animal. When an animal, during its last milking run, has supplied a quantity of milk (m1) which deviates considerably from the quantity of milk supplied on average per milking run by this animal in the period of time (T), i.e. deviates from the progressing average m, the waiting time (W) is to be adjusted by a coefficient m1/m.

An other possible correction factor may be applied for the situation in which the quantity of milk (N) yielded by means of the milking robot in the calculated waiting time deviates considerably from the calculated quantity M*W/T. The subsequently calculated waiting time can then be adjusted by a coefficient M*W/T*N.

By means of this system of waiting time calculations depending on the animals, there is obtained the advantage that high productive animals are better treated. They are alotted shorter waiting times as long as they produce much milk and the waiting times become automatically longer when the milk production decreases in the course of the lacatation period. Low productive cows can no longer harm the efficiency of the robot by occupying same unnecessarily, until e.g. four times per 24 hours. They are restricted to two or at the most three milking runs per 24 hours.

It is noticed that the invention is not restricted to the embodiment shown and the calculation example given. In and around the point M/m = 60, the second-degree relation between M/m and W can also be replaced by a linear relation, such as M/m = 17W - 42. Furthermore, in case of an other number of animals or an other duration of the milking run, there can be applied an adapted relation between M/m and W.

## Claims

1. A method of automatically milking animals which are allowed to walk around freely in an accommodation and to go each individually to a milk box including a milking robot and which, prior to possibly being milked, are automatically identified, in which method the moments when an animal has been milked and the quantities of milk supplied thereby by the animal are recorded, said method comprising the step of defining a milking criterion that has to be met in order that this animal, after having presented itself again at the milk box or near thereto, is to be milked again, **characterized in that**, the milking criterion is defined on the basis of the quantity of milk (M) yielded by means of the milking robot in a fixed period of time (T) and the quantity of milk (m) supplied by one animal in this period of time (T).

2. A method as claimed in claim 1, **characterized in that** the milking criterion is constituted by the waiting time (W) that should at least have elapsed since the last milking run of this animal, in order that the animal, after having presented itself again at the milk box of near thereto, is to be milked again.

3. A method as claimed in claim 2, **characterized in that** the waiting time (W) is a function of the relation (M/m) between the quantity of milk (M) which has been yielded by means of the milking robot in the period of time (T) and the quantity of milk (m) which has been supplied by one animal in the period of time (T).

4. A method as claimed in claim 3, **characterized in that** the functional relation between the waiting time (W) and the relation (M/m) in an interval around the value M/m = 60 is approximately according to M/m = W² + 5W - 6.

5. A method as claimed in any one of claims 2 to 4, **characterized in that** an animal, for which the calculated waiting time (W) exceeds a fixed maximum value, will not be milked, whereby it will be indicated that this animal can be set dry.

6. A method as claimed in any one of claims 2 to 5, **characterized in that**, when an animal has supplied during its last milking run a quantity of milk (m1) deviating considerably from the quantity of milk (m) supplied by said animal on average per milking run, the waiting time (W) will be adjusted by a coefficient m1/m.

7. A method as claimed in any one of claims 2 to 6, **characterized in that**, when it appears that the quantity of milk (N) yielded by means of the milking robot in the calculated waiting time deviates considerably from the calculated quantity M*W/T, the subsequently calculated waiting time (W) will be adjusted by a coefficient M*W/T*N.

8. A construction for automatically milking animals which are allowed to walk around freely in an accommodation and to go each individually to a milk box (7) including a milking robot (8) for being milked there, which construction is provided with an animal identification system and means for establishing the quantity of milk yielded from each animal, **characterized in that** there is available a computer (10) with means to define, on the basis of the quantity of milk yielded by means of the milking robot (8) in a fixed period of time and the quantity of milk supplied by one animal in said period of time, a milking criterion that has to be met in order that the animal, after having presented itself again at the milk box (7) or near thereto, is to be milked again.

9. A construction as claimed in claim 8, **characterized in that** the computer (10) is equipped for executing the method as claimed in any one of claims 1 to 7.

## Patentansprüche

1. Verfahren zum automatischen Melken von Tieren, die die Möglichkeit haben, in einer Unterkunft frei umherzulaufen und jeweils einzeln zu einer Melkbox mit einem Melkroboter zu gehen, und die vor einem etwaigen Melken automatisch identifiziert werden, wobei bei dem Verfahren die Zeitpunkte, zu denen ein Tier gemolken wurde, und die dabei von dem Tier gelieferten Milchmengen aufgezeichnet werden, wobei das Verfahren den Verfahrensschritt des Definierens eines Melkkriteriums umfaßt, das erfüllt werden muß, damit dieses Tier, nachdem es sich erneut bei oder nahe der Melkbox eingefunden hat, wieder gemolken wird,
**dadurch gekennzeichnet, daß** das Melkkriterium definiert wird auf der Basis der Milchmenge (M), die mittels des Melkroboters innerhalb eines festgelegten Zeitraumes (T) gewonnen wird, und der Milchmenge (m), die von einem Tier innerhalb dieses Zeitraumes (T) geliefert wird.

2. Verfahren nach Anspruch 1,
**dadurch gekennzeichnet, daß** das Melkkriterium gebildet wird durch die Wartezeit (W), die seit dem letzten Melkdurchgang dieses Tieres mindestens hätte verstrichen sein müssen, damit das Tier, nachdem es sich erneut bei oder nahe der Melkbox eingefunden hat, wieder gemolken wird.

3. Verfahren nach Anspruch 2,
**dadurch gekennzeichnet, daß** die Wartezeit (W) eine Funktion des Verhältnisses (M/m) zwischen der Milchmenge (M), die mittels des Melkroboters innerhalb des Zeitraumes (T) gewonnen wird, und der Milchmenge (m) ist, die von einem Tier innerhalb des Zeitraumes (T) geliefert wird.

4. Verfahren nach Anspruch 3,
**dadurch gekennzeichnet, daß** die funktionelle Beziehung zwischen der Wartezeit (W) und dem Verhältnis (M/m) in einem Bereich um den Wert M/m = 60 etwa lautet: M/m = W² + 5W - 6.

5. Verfahren nach einem der Ansprüche 2 bis 4,
**dadurch gekennzeichnet, daß** ein Tier, bei dem die errechnete Wartezeit (W) einen festgelegten Maximalwert überschreitet, nicht gemolken wird, wobei angezeigt wird, daß dieses Tier trockengestellt werden kann.

6. Verfahren nach einem der Ansprüche 2 bis 5,
**dadurch gekennzeichnet, daß** für den Fall, daß ein Tier bei seinem letzten Melkdurchgang eine Milchmenge (m1) geliefert hat, die beträchtlich von der Milchmenge (m) abweicht, die von dem Tier im Durchschnitt pro Melkdurchgang geliefert wird, die Wartezeit (W) um einen Koeffizienten m1/m justiert wird.

7. Verfahren nach einem der Ansprüche 2 bis 6,
**dadurch gekennzeichnet, daß** für den Fall, daß die mittels des Melkroboters in der errechneten Wartezeit gewonnene Milchmenge (N) beträchtlich von der errechneten Menge M*W/T abweicht, die anschließend errechnete Wartezeit (W) um einen Koeffizienten M*W/T*N justiert wird.

8. Vorrichtung zum automatischen Melken von Tieren, die die Möglichkeit haben, in einer Unterkunft frei umherzulaufen und jeweils einzeln zu einer Melkbox (7) mit einem Melkroboter (8) zu gehen, um dort gemolken zu werden, wobei die Vorrichtung mit einem Tieridentifikationssystem sowie mit einer Vorrichtung zur Ermittlung der von jedem Tier gewonnenen Milchmenge versehen ist,
**dadurch gekennzeichnet, daß** ein Computer (10) vorhanden ist, der Vorrichtungen aufweist, um auf der Basis der mittels des Melkroboters (8) innerhalb eines festgelegten Zeitraumes gewonnenen Milchmenge und der innerhalb des Zeitraumes von einem Tier gelieferten Milchmenge ein Melkkriterium zu definieren, das erfüllt werden muß, damit das Tier, nachdem es sich erneut bei oder nahe der Melkbox (7) eingefunden hat, wieder gemolken wird.

9. Vorrichtung nach Anspruch 8,
**dadurch gekennzeichnet, daß** der Computer (10) dazu ausgelegt ist, das Verfahren nach einem der Ansprüche 1 bis 7 anzuwenden.

## Revendications

1. Procédé de traite automatique d'animaux qui peuvent se promener librement dans un lieu et aller chacun individuellement dans un box de traite comprenant un robot de traite et qui, avant d'être éventuellement traits, sont identifiés automatiquement, dans lequel procédé, les moments durant lesquels l'animal a été trait et les quantités de lait ainsi fournies par l'animal sont enregistrés, ledit procédé comprenant l'étape consistant à définir des critères de traite qui doivent être satisfaits afin que cet animal, après s'être présenté lui-même au box de traite ou à proximité de celui-ci, soit trait de nouveau, **caractérisé en ce que**, les critères de traite sont définis en se basant sur la quantité de lait (M) traité au moyen du robot de traite pendant une période de temps (T) fixe et la quantité de lait (m) fournie par un animal pendant cette période de temps (T).

2. Procédé selon la revendication 1, **caractérisé en ce que** le critère de traite comprend le temps d'attente (W) qui doit au moins s'être écoulé depuis la dernière traite de cet animal, afin que l'animal, après s'être présenté lui-même de nouveau au box de traite à proximité de celui-ci, soit de nouveau trait.

3. Procédé selon la revendication 2, **caractérisé en ce que** le temps d'attente (W) est fonction de la relation (M/m) entre la quantité de lait (M) qui a été fournie au moyen du robot de traite pendant la période de temps (T) et la quantité de lait (m) qui a été traité par un animal pendant la période de temps (T).

4. Procédé selon la revendication 3, **caractérisé en ce que** la relation fonctionnelle entre le temps d'attente (W) et la relation (M/m) dans un intervalle proche de la valeur M/m = 60 correspond approximativement à la relation M/m = W2 + 5W - 6.

5. Procédé selon l'une quelconque des revendications 2 à 4, **caractérisé en ce qu'**un animal, pour lequel le temps d'attente calculé (W) dépasse une valeur maximale fixée, ne sera pas trait, moyennant quoi il est indiqué que cet animal peut être laissé non trait.

6. Procédé selon l'une quelconque des revendications 2 à 5, **caractérisé en ce que**, lorsqu'un animal a fourni pendant sa dernière traite une quantité de lait (m1) s'écartant considérablement de la quantité de lait (m) fournie par ledit animal en moyenne par traite, le temps d'attente (W) est ajusté par un coefficient m1/m.

7. Procédé selon l'une quelconque des revendications 2 à 6, **caractérisé en ce que**, lorsqu'il apparaît que la quantité de lait (N) fournie au moyen du robot de traite pendant le temps d'attente calculé s'écarte considérablement de la quantité calculée M*W/T, le temps d'attente (W) calculé par la suite est ajusté par un coefficient M*W/T*N.

8. Structure destinée à traire automatiquement des animaux qui peuvent se promener librement dans un lieu et aller chacun individuellement dans un box de traite (7) comprenant un robot de traite (8) afin d'y être traits, ladite structure étant prévue avec un système d'identification de l'animal et des moyens destinés à déterminer la quantité de lait fournie par chaque animal, **caractérisée en ce qu'**un ordinateur (10) est disponible avec des moyens destinés à définir, en se basant sur la quantité de lait fournie au moyen du robot de traite (8) pendant une période de temps fixée et sur la quantité de lait fournie par un animal pendant ladite période de temps, un critère de traite qui doit être satisfait afin que l'animal, après s'être présenté lui-même de nouveau au box de traite (7) ou à proximité de celui-ci, soit de nouveau trait.

9. Structure selon la revendication 8, **caractérisée en ce que** l'ordinateur (10) est équipé pour exécuter le procédé selon l'un quelconque des revendications 1 à 7.
